(19) **Europäisches Patentamt / European Patent Office / Office européen des brevets**

(11) **EP 3 059 585 A1**

(12) # EUROPEAN PATENT APPLICATION
published in accordance with Art. 153(4) EPC

(43) Date of publication:
**24.08.2016 Bulletin 2016/34**

(21) Application number: **14852212.1**

(22) Date of filing: **07.10.2014**

(51) Int Cl.:
**G01N 30/56** *(2006.01)*    **G01N 30/88** *(2006.01)*

(86) International application number:
**PCT/JP2014/076835**

(87) International publication number:
**WO 2015/053276 (16.04.2015 Gazette 2015/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.10.2013 JP 2013211452**

(71) Applicant: **Kaneka Corporation**
**Osaka-shi, Osaka 530-8288 (JP)**

(72) Inventors:
• **NAKANO, Yoshiyuki**
  **Takasago-shi, Hyogo 676-8688 (JP)**

• **MINAKUCHI, Kazunobu**
  **Takasago-shi, Hyogo 676-8688 (JP)**
• **FUNAKI, Masahiro**
  **Takasago-shi, Hyogo 676-8688 (JP)**
• **KAWASAKI, Hiroaki**
  **Settsu-shi, Osaka 566-0072 (JP)**

(74) Representative: **Vossius & Partner**
**Patentanwälte Rechtsanwälte mbB**
**Siebertstrasse 3**
**81675 München (DE)**

(54) **METHOD FOR MANUFACTURING SMALL-DIAMETER COLUMN FOR CHROMATOGRAPHY**

(57) Packing a column with a chromatography medium at prescribed compression factor , and then passing a mobile phase through the column packed with the chromatography medium while switching the mobile phase flow direction two or more times. According to the present invention, a small-diameter chromatography column packed uniformly and densely as well as a large-diameter column can be reproducibly prepared. The small-diameter chromatography column prepared in this way has the asymmetry factor of not less than 0.80 and not more than 1.80.

EP 3 059 585 A1

**Description**

TECHNICAL FIELD

The present invention relates to a method for preparing a liquid chromatography column.

BACKGROUND ART

Column chromatography is generally known as a method for separating compounds from a mixture and has been industrially widely used as compounds purification technique. The scale-up of column chromatography is generally accomplished by increasing the column diameter. However, the packing state of the chromatography medium in a column is not necessarily the same between a small-diameter column and a large-diameter column. The supportive influence of the column inner wall on the chromatography medium diminishes with increasing column diameter, whereby the chromatography medium in a large-diameter column is more likely to be compressed than that in a small-diameter column. Therefore, generally, the packing density in a large-diameter column is higher than that in a small-diameter column (Non-Patent Document 1).
The separation performance (resolution) and processing capacity of column chromatography changes depending on the packing state of the chromatography medium (Patent Document 1). Therefore, when the packing density of a small-diameter column is lower than a large-diameter column, the separation performance (resolution) and processing capacity of the small-diameter column is not necessarily as well as the large-diameter column; this has been one of reasons which make the linear scale-up of column chromatography difficult to achieve. Although various kinds of excellent methods for packing a large-diameter column have been already developed (Non-Patent Document 1), preparing a small-diameter column by applying these methods hardly results in achieving similar packing state as in a large-diameter column, because a strong supporting effect of the column inner wall prevents the chromatography medium from compression in a small-diameter column.
With known packing methods as described above, it has been difficult to prepare a small-diameter column packed uniformly and densely as well as a large-diameter column in good reproducibility.

PRIOR ART DOCUMENTS

PATENT DOCUMENT

Patent Document 1: JP-2013-515258(A)

NON-PATENT DOCUMENT

Non-patent Document 1: Lars Hagel, Gunter Jagschies and Gail Sofer, "Handbook of Process Chromatography, second edition", 2008,321-330

SUMMARY OF THE INVENTION

PROBLEM TO BE SOLVED BY THE INVENTION

An object of the present invention is to provide a method for reproducibly preparing a small-diameter chromatography column packed uniformly and densely as well as a large-diameter column.

SOLUTIONS TO THE PROBLEM

As a result of extensive research in the light of the above problem, the present inventors have found that the above problem can be solved by improving the process of packing a chromatography medium in a column from the following view point, and thus accomplished the invention of the present application. That is to say, the outline of the present invention is as follows.
The present invention is a method for preparing a small-diameter chromatography column comprising the steps of :

packing a column with a chromatography medium at prescribed compression factor; and
passing a mobile phase through the column packed with the chromatography medium while switching the mobile phase flow direction two or more times.

The present invention is also a method for preparing a small-diameter chromatography column comprising the steps of:

packing a column with a chromatography medium at the compression factor smaller than the prescribed compression factor;
passing a mobile phase through the column packed with the chromatography medium while switching the mobile phase flow direction two or more times; and thereafter
compressing the chromatography medium until the prescribed compression factor is achieved.

The present invention is also characterized in that the small-diameter chromatography column is not more than 3cm in the method for preparing the small-diameter chromatography column.

The present invention is also characterized in that the prescribed compression factor is not less than 1.02 and not more than 1.30 in the method for preparing the small-diameter chromatography column.

The present invention is also characterized in that base material of the chromatography medium is agarose, cellulose or synthetic polymer in the method for preparing the small-diameter chromatography column.

The present invention is also a method for preparing a small-diameter chromatography column with prescribed bed volume (a) by packing the column with the chromatography medium,
wherein, in said packing step, the chromatography medium having settled volume (b) of not less than 1.02 and not more than 1.30 times larger than the bed volume (a) is packed into the column under compression in the form of slurry, before passing the mobile phase through the column while switching the direction two or more times.

The present invention is also characterized in that the chromatography medium has the volume-based median diameter of not less than 10μm and not more than 500μm in the method for preparing the small-diameter chromatography column.

The present invention is also characterized in that having the asymmetry factor of not less than 0.80 and not more than 1.80 in the method for preparing the small-diameter chromatography column.

EFFECTS OF THE INVENTION

According to the present invention, a small-diameter chromatography column packed uniformly and densely as well as a large-diameter column can be reproducibly prepared.

BRIEF DESCRIPTION OF THE DRAWING

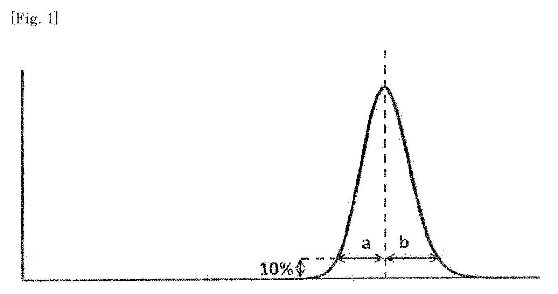

Fig. 1 is a diagram showing the calculation of the asymmetry factor according to an example of the present invention.

MODE FOR CARRYING OUT THE INVENTION

Hereinafter, the present invention will be described in further detail.

The method for preparing a chromatography column provided by the present invention can be applied to any of ordinary closed type liquid chromatography columns having internal diameter of not more than 3 cm, through which mobile phase can be passed from both directions. In particular, the method is suitable for columns having internal diameter of not more than 2.5 cm, further internal diameter of not more than 2 cm, which are difficult to prepare according to previous method. The method can be more suitably applied to columns having internal diameter of not more than 1 cm (e.g., not less than 0.2 cm and not more than 1 cm).

In the present invention, any characteristic values of the column (the bed height of the column, etc.) except the diameter are not particularly limited. However, for example, the bed height of the column is preferably not more than 50 cm, and more preferably not more than 30 cm. The lower limit of the bed height is not particularly limited, and may be about 5 cm, for example. According to the present invention, even when the bed height is not less than 10 cm, particularly not less than 20 cm, the column can be uniformly packed at high compression factor.

The chromatography medium in the present invention is not particularly limited as long as it is ordinary one for liquid chromatography. Base material of the chromatography medium is preferably agarose, cellulose, or synthetic polymer and volume-based median diameter of the chromatography medium is preferably within a range of not less than 10 μm and not more than 500 μm. In addition, in terms of effects, the present invention can be suitably applied to the mechanically strong chromatography medium having the volume-based median diameter of not less than 30 μm and not more than 200 μm, which is particularly hard to be packed in a small-diameter column. The mechanically strong chromatography media referred to herein are such as the following example. When 20 degrees Celsius water is passed through a 30 cm internal diameter column with 20 cm bed height, which is packed with the mechanically strong chromatography medium, the flow rate at which the pressure on the chromatography medium reaches 0.2 MPa is 1.5 times or more higher than the flow rate at which it reaches 0.1 MPa. Examples of such mechanically strong chromatography medium include highly cross-linked agarose, highly cross-linked cellulose, and synthetic polymer.

<Compression Factor >

The term "compression factor" as used herein is defined by the following equation.

Compression factor= (settled volume (b) of the chromatography medium)/(bed volume (a) of the column)

The compression factor in a large-diameter column depends on the kind of a chromatography medium, but is generally within a range of not less than 1.02 and not more than 1.30. When the compression factor is too high, the pressure during passage of liquid increases, resulting in decrease in the processing capacity (performance). This also causes the "leading" in chromatography, resulting in decrease in the separation performance (resolution). On the other hand, when the compression factor is too low, the packing state becomes unstable, resulting in changes in the separation performance (resolution) of the column during use. This also causes the "tailing" in chromatography, resulting in decrease in the separation performance (resolution). The method provided by the present invention can be applied to the preparation of a small-diameter column having a compression factor similar to that of a large-diameter column, that is, not less than 1.02 and not more than 1.30. In particular, the method is suitable for the preparation of a small-diameter column having a compression factor of not less than 1.04 and not more than 1.20.

<Settled Volume (b)>

"Settled volume (b)" as used herein means volume measured by the method of following steps.

1) Suspending a chromatography medium in 0.5 M aqueous sodium chloride, placing the suspension in a graduated container having internal diameter of not less than 2 cm, and then letting the chromatography medium settle out.
2) Vibrating the container, and then letting the chromatography medium settle.
3) Repeating the step 2) till the upper end of the chromatography medium bed becomes constant; the volume of the chromatography medium bed at this time is defined as the "settled volume."

There are two ways to perform settlement operations in the above steps 1) and 2), one is performed under gravity (1 G = 9.8 m/s$^2$) by standing the container, the other is performed under specific centrifugal force (not more than 630 G) by centrifuging the container, and either method may be applicable.

<Slurry>

The term "slurry" as used herein means dispersion of a chromatography medium and liquid. Such slurry can be used in putting the chromatography medium into a column. The liquid is not particularly limited as long as it is homogeneous liquid containing no precipitate or floating matter, but it is preferable that the liquid is composed of polar solvent, and additives soluble in the polar solvent may also be contained in the liquid. Examples of polar solvents include water, water-soluble solvents (alcohols such as methanol and ethanol; acetonitrile, etc.), and mixed solvents thereof. The addition of alcohols can be expected to increase the pressure on the chromatography medium during passage, and thus alcohols may be effective in packing a small-diameter column that is more difficult to be packed. Examples of additives include acids, bases, salts (in particular, sodium chloride, etc.), and polyethylene glycol. The mass ratio between water and water-soluble solvent can be set from, for example, a range of about 100 : 0 to 50 : 50, preferably about 95 : 5 to 60 : 40, and still more preferably about 90 : 10 to 70 : 30. The additive concentration can be set from, for example, a range of about not less than 0 M (mol/L) and not more than 10 M, preferably about not less than 0.1 M and not more than 5 M, and still more preferably about not less than 0.2 M and not more than 3 M.

<Slurry Concentration>

The term "slurry concentration" as used herein is defined by the following equation.

$$\text{Slurry concentration (\%)} = \{(\text{settled volume (b) of the chromatography medium}$$

$$\text{contained in the slurry})/(\text{slurry volume (c)})\} \times 100$$

The slurry concentration is preferably not less than 30% and not more than 70%, more preferably not less than 35% and not more than 65%, and most preferably not less than 40% and not more than 60%. When the slurry concentration is more than this range, the resulting slurry viscosity is high; making uniform packing difficult. On the contrary, when the concentration is less than this range, it takes long time to complete packing.

<Packing a Chromatography Medium >

In the present invention, the step of packing a chromatography medium includes: a step of putting the required amount of chromatography medium into an empty chromatography column (Step 1) and a step of sedimenting and compressing the chromatography medium (Step 2).

In Step 1, the required amount of chromatography medium is put in the form of slurry. The volume of the slurry to be put (volume c) can be determined by the following equation, using the slurry concentration, the volume of the column to be prepared (bed volume (a)), and the compression factor of the column to be prepared.

$$\text{Volume of slurry to be put} \quad (\text{volume c}) = \{(\text{bed volume (a)}) \times (\text{compression factor})\}/\{(\text{slurry concentration})/100\}$$

That is to say, the small-diameter column is packed with the slurry containing the chromatography medium, the settled volume (b) of which is not less than 1.02 and not more than 1.30 times larger than the bed volume (a).

The method for the sedimentation/compression of the chromatography medium in Step 2 is not particularly limited as long as it is an ordinary sedimentation/compression method capable of achieving a prescribed compression factor. However, in order to preparing a column with high separation performance reproducibly, it is preferable to use the following compression method (a), compression method (b), or a method that combines compression method (a) and compression method (b).

Compression Method (a): Liquid-Passing Compression Method

A liquid is passed through the column by a pump to sediment and compress the chromatography medium. The degree of compression of the chromatography medium is adjusted by the flow rate of passage. The passing liquid is not particularly limited as long as it is homogeneous liquid containing no precipitate or floating matter, but it is preferable that the liquid is composed of polar solvent, and additives soluble in the polar solvent may also be contained in the liquid. Examples of the polar solvents include water, alcohols, acetonitrile, and mixed solvents thereof, and examples of the additives include acids, bases, salts, and polyethylene glycol.

Compression Method (b): Mechanical Compression Method

The chromatography medium is sedimented and compressed by adjusting an adjustable plug attached to the column. When the adjustable plug is adjusted, at least one of the openings at both ends of the column is opened to serve as a liquid discharge port.

<Passage of Mobile Phase>

By using the above compression method (a) or compression method (b) for compressing a chromatography-medium-containing slurry in a column, the chromatography medium is entirely packed in the column. During or after this packing, mobile phase is passed through the column. The passage of mobile phase after packing is performed for the purpose of uniformizing the packing state of the chromatography medium. The passage of the mobile phase after packing also serves as the initial passage in the flow direction switching treatment described below.

With respect to the flow rate of passage after packing, too high flow rate leads packing state to further non-uniformity, while too low flow rate does not have sufficient uniformization effect. The optimal flow rate depends on the kind of a chromatography medium, the packing state, the compression factor, the column internal diameter, the bed height, and the composition of the mobile phase. However, the range thereof may be set from a range of about not less than 30 cm/h and not more than 10000 cm/h, preferably not less than 100 cm/h and not more than 10000 cm/h, more preferably not less than 500 cm/h and not more than 8000 cm/h, and still more preferably not less than 1000 cm/h and not more than 6000 cm/h. The flow rate does not have to be constant, and passage may be performed while changing the rate. In addition, in the case where the obtained column is not sufficiently uniform, it is possible to change the flow rate and perform the passage operation again to achieve uniformity. In addition, it is also possible to apply different flow rates for different mobile phase flow directions. In the case where the flow rate is changed, it is preferable that at least the highest rate is, for example, not less than 300 cm/h, preferably not less than 500 cm/h, and more preferably not less than 1000 cm/h.

With respect to the passage time of the mobile phase after packing (the duration for which the passage is continuously performed in one direction), 1 minute or more is effective for uniformization. However, for efficient uniformization, the time is preferably from 1 to 30 minutes. In the case where several stages of passage rates are set, the passage time in each setting or the total passage time may be within the above range. In addition, in the case where the passage rate is continuously varied, the total passage time may be within the above range.

The mobile phase is not particularly limited as long as it is homogeneous liquid containing no precipitate or floating matter, but is preferably liquid composed of polar solvent, and additives soluble in the polar solvent may also be contained in the liquid. Examples of polar solvents include water, alcohols, acetonitrile, and mixed solvents thereof, and examples of additives include acids, bases, salts, and polyethylene glycol. This mobile phase may be the same as or different from the solvent of the chromatography medium slurry.

<Switching of Mobile Phase Flow Direction>

The present invention is characterized in that the mobile phase flow direction is switched. "To switch the mobile phase flow direction" as used herein means that, of the two openings at both ends of a column, the opening that has been used as an inlet of mobile phase is used as an outlet, while the opening that has been used as an outlet is used as an inlet, thereby reversing the mobile flow direction. This can be performed by switching the valves of the device connecting the column, or can also be performed by once removing the column from the device and reversing the direction of connection of the column. The switching of the mobile phase flow direction is effective in promoting the uniformization of the packing state. The effective frequency of switching depends on the kind of a chromatography medium, the packing state, the compression factor, the column internal diameter, the bed height, and the composition of the mobile phase, but the direction is switched preferably not less than 3 times, and more preferably not less than 5 times (particularly about not less than 7 times and not more than 30 times). In addition, in the case where the obtained column is not sufficiently uniform, it is possible to further add a switching operation and perform passage to achieve uniformity.

In the case where mobile phase is passed through the column while switching the mobile phase flow direction, the flow rate in the initial mobile phase flow direction (hereinafter referred to as forward direction) and that in the reversed direction (hereinafter referred to as reverse direction) are the same or different from each other, and they are, for example, not less than 100 cm/h and not more than 10000 cm/h, preferably not less than 500 cm/h and not more than 7000 cm/h, and more preferably not less than 1000 cm/h and not more than 5000 cm/h. Either in the forward direction or in the reverse direction, the flow rate does not have to be constant. In the case where the flow rate is changed, it is preferable that at least the highest rate is, for example, not less than 1000 cm/h, preferably not less than 1200 cm/h, and more preferably not less than 1500 cm/h. The passage time per flow in the forward direction or reverse direction is, for example, not less than 1 minute, preferably not less than 1 minute and not more than 60 minutes, and more preferably not less than 1 minute and not more than 30 minutes. In addition, the flow rate pattern may be different between the forward direction and the reverse direction, but is preferably the same. In the case where the flow rate pattern is different between the forward direction and the reverse direction, the flow rate in the reverse direction may be lower. In addition, it is also possible that a combination in which the flow rate pattern is the same between the forward direction and the reverse direction (first set) is performed several times, then a combination in which the flow rate pattern is the same between the forward direction and the reverse direction but not the same as the first set (second set) is performed several times, and subsequently third or further set can be performed several times each if necessary.

For the mobile phase to be passed through the column while switching the mobile phase flow direction, a solvent similar to the solvent for the mobile phase used to pack the column with the chromatography medium slurry can be used, and the mobile phase may be the same as or different from the mobile phase used for packing. In the case where they are different, the additive concentration may be reduced or the proportion of water may be increased as compared with the solvent of the chromatography medium slurry.

<Post-Compression Step>

After finishing the passage of the mobile phase while switching the mobile phase flow direction, another compression step (post-compression step) may be performed as necessary. The conditions for this compression step may be the same as the conditions for the compression step (pre-compression step) which is performed before the passage of the mobile phase while switching the mobile phase flow direction, and may also be stronger or weaker compression than in the pre-compression step.

<Timing to Reach Prescribed Compression Factor >

The timing at which the chromatography medium is packed to the desired compression factor (i.e., the timing at which the desired bed height is achieved) is not particularly limited as long as it is before the completion of the entire process. However, for example, it may be at the time of the completion of the pre-compression step (i.e., before switching the mobile phase flow direction), and it is also possible that the chromatography medium is packed at a compression factor smaller than the desired compression factor at the time of the completion of the pre-compression step. In the latter case, the desired compression factor may be reached at a suitable stage during the subsequent passage while switching the mobile phase flow direction, and it is also possible that the post-compression step is performed after the passage while switching the mobile phase flow direction, and the desired compression factor is reached during this post-compression step.

<Asymmetry Factor>

The asymmetry factor (As) of a column is generally used as a parameter for the evaluation of the packing state in the column, and can be calculated by the following method.

(Calculation Method for "As")

For the calculation of "As", an evaluation substance is injected onto a packed column, and "As" is calculated from the resulting chromatogram when mobile phase is fed at a constant rate. At this time, for the detection of the evaluation substance, a detection method used for HPLC (high-performance liquid chromatography), for example, can be used, and accurate detection is possible by using an ultraviolet absorption (UV) detector, an electrical conductivity detector, a differential refractive index detector, or the like.

In the present invention, specifically, "As" is calculated based on a chromatogram resulting from the injection of small amount of evaluation sample onto an evaluation target column. Chromatogram acquisition methods include a method using acetone (chromatogram acquisition method a) and a method using sodium chloride (chromatogram acquisition method b) depending on the evaluation sample.

Chromatogram Acquisition Method (a): Method using acetone

This method is applicable to chromatography media for affinity chromatography, chromatography media for ion exchange chromatography, chromatography media for size exclusion chromatography, and chromatography media for hydroxyapatite chromatography. At first, water is passed through the evaluation target column by the amount of twice or more than twice as much as the column bed volume. Thereafter 1% (v/v) acetone aqueous solution is injected on the column in the amount equivalent to 1% of the column bed volume, and then water is fed to the column at a flow rate of 50 cm/h. A chromatogram at detection wavelength of 280 nm is obtained by an ultraviolet detector installed downstream of the column.

Chromatogram Acquisition Method (b): Method using sodium chloride

This method is applicable to chromatography media for affinity chromatography, chromatography media for ion exchange chromatography, chromatography media for size exclusion chromatography, chromatography media for hydrophobic interaction chromatography, and chromatography media for mixed-mode chromatography combining a hydrophobic group and an ion exchange group. At first, 0.5 M aqueous sodium chloride is passed through the evaluation target column by the amount of twice or more than twice as much as the column bed volume. Thereafter 1 M aqueous sodium chloride is injected on the column in the amount equivalent to 1% of the column bed volume, and then mobile phase is fed to the column at a flow rate of 50 cm/h. A chromatogram of electrical conductivity is obtained by an electrical conductivity detector installed downstream of the column.

In the chromatogram shown in Fig. 1, "As" is calculated by the following equation.

$$\mathrm{As} = \mathrm{b}/\mathrm{a}$$

a: First-half peak width measured at 10% of the peak height.
b: Second-half peak width measured at 10% of the peak height.

It is believed that "As" is ideally 1.00, but a range of not less than 0.80 and not more than 1.80 is suitable in actual use. In particular, a range of not less than 0.90 and not more than 1.50 is preferable, and a range of not less than 0.95 and not more than 1.30 is the most preferable. In the case where "As" is less than this range, it is presumed that the chromatography medium is excessively compressed, the packing state is not uniform, or cracking has occurred in the chromatography medium bed. Meanwhile, in the case where "As" is more than this range, it is presumed that the compression of the chromatography medium is insufficient.

In all the following examples, "As" is close to 1.00, indicating suitable packing state. In contrast, in the comparative examples, although the compression factors are similar to those in the examples, "As" is less than 0.80, and thus it is presumed that the packing state is not uniform.

This application claims the benefit of the priority of Japanese Patent Application No. 2013-211452 filed on October 8, 2013. The entire contests of the specification of Japanese Patent Application No. 2013-211452 filed on October 8, 2013 are incorporated herein by reference.

EXAMPLES

Hereinafter, the invention of the present application will be described in further detail through examples. However, the invention of the present application is not limited to the following examples.

(Example 1)

As a chromatography medium, KANEKA KanCapA (manufactured by KANEKA CORPORATION: chromatography medium for affinity chromatography, volume-based median diameter: 65 to 85 $\mu$m, base material: highly cross-linked cellulose) was used. The chromatography medium was slurried with 0.5 M aqueous sodium chloride, and then six columns having different bed heights and compression factors were prepared and evaluated by the following procedures.

<Implementation Procedures>

1) The slurry was placed in a graduated centrifugal tube and centrifuged at 2000 rpm (equivalent to 630 G) for 20 seconds in a centrifuge (manufactured by KUBOTA CORPORATION, Table-Top Centrifuge 2410), and then the chromatography medium was settled. Subsequently, vibrating the centrifugal tube and centrifuging it (at 20000 rpm for 20 seconds) were repeatedly and alternately conducted to settle the chromatography medium bed completely, and the settled volume of the chromatography medium contained in the slurry was determined.

2) The slurry was entirely transferred to a glass filter, the chromatography medium was washed with mobile phase (20% aqueous ethanol containing 0.5 M sodium chloride) on the filter, and then the chromatography medium was slurried with the mobile phase. From the settled volume determined in 1) and the slurry volume, the slurry concentration was calculated (slurry concentration: 50%).

3) From the column internal diameter, the desired bed height and compression factor shown in Table 1, and the slurry concentration determined in 2), the amount of slurry necessary for packing was calculated, and the necessary amount of slurry was put into a 0.5-cm-diameter glass column.

4) Mobile phase (20% aqueous ethanol containing 0.5 M sodium chloride) was passed through the column at a flow rate of 153 cm/h, and the chromatography medium was sedimented. Subsequently, the flow rate was increased (4.9 cm bed height column (compression factor : 1.12): up to 6115 cm/h, 5.1 cm bed height column (compression factor : 1.08): up to 4586 cm/h, 5.3 cm bed height column (compression factor : 1.04): up to 4586 cm/h, 17.4 cm bed height column (compression factor : 1.12): up to 7338 cm/h, 18.0 cm bed height column (compression factor : 1.08): up to 6115 cm/h, 18.7 cm bed height column (compression factor : 1.04): up to 5197 cm/h), thereby compressing each chromatography medium bed to the position 0.5 cm higher than the desired bed height shown in Table 1. Subsequently, each chromatography medium bed was compressed to the desired bed height by a mechanical compression method.

5) The mobile phase was passed through the column at a flow rate of 4586 cm/h, and the mobile phase flow direction was switched every minute, 19 times in total. Subsequently, the flow rate of the mobile phase was changed to 3669 cm/h, and the mobile phase flow direction was switched every minute, 19 times in total.

<Results>

The performance of each column was evaluated according to the "As" calculation method described above.

Acetone was used as an evaluation sample. The results of performance are shown in Table 1.

[Table 1]

| Test No. | Bed height (cm) | Compression factor | As |
|---|---|---|---|
| 1 | 4.9 | 1.12 | 0.95 |
| 2 | 5.1 | 1.08 | 1.08 |
| 3 | 5.3 | 1.04 | 1.09 |
| 4 | 17.4 | 1.12 | 0.91 |
| 5 | 18.0 | 1.08 | 0.98 |
| 6 | 18.7 | 1.04 | 0.95 |

(Example 2)

As a chromatography medium, MabSelect SuRe (manufactured by GE Healthcare: chromatography medium for affinity chromatography, volume-based median diameter: 85 $\mu$m, base material: highly cross-linked agarose) was used. The chromatography medium was slurried with 0.5 M aqueous sodium chloride, and then two columns having the same bed height and compression factor were prepared by the following procedures to examine the reproducibility of the method.

<Implementation Procedures>

1) The slurry was placed in a graduated cylinder. Gravity settlement and vibrating were repeated to settle the chromatography medium bed completely, then the settled volume of the chromatography medium contained in the slurry was determined, and the slurry concentration was calculated (slurry concentration: 50%).
2) From the column internal diameter, the desired bed height and compression factor shown in Table 2, and the slurry concentration determined in 1), the amount of slurry necessary for packing was calculated, and the necessary amount of slurry was put into a 0.66-cm-diameter glass column.
3) Mobile phase (0.5 M aqueous sodium chloride) was passed through the column at a flow rate of 877 cm/h to perform the primary compression of the chromatography medium bed, and then the chromatography medium bed was compressed to 7 cm, which was the desired bed height, by a mechanical compression method.
4) The mobile phase was passed through the column at a flow rate of 3508 cm/h, and the mobile phase flow direction was switched every 10 minutes, 11 times in total.

<Results>

The performance of each column was evaluated according to the "As" calculation method described above. Sodium chloride was used as an evaluation sample. The results of performance are shown in Table 2.

[Table 2]

| Test No. | Bed height (cm) | Compression factor | As |
|---|---|---|---|
| 1 | 7.0 | 1.08 | 1.00 |
| 2 | 7.0 | 1.08 | 1.00 |

(Example 3)

As a chromatography medium, Fractogel EMD COO-(M) (manufactured by Merck Millipore Corporation: chromatography medium for ion exchange chromatography, particle size: not less than 40 $\mu$m and not more than 90 $\mu$m, base material: synthetic polymer) was used. The chromatography medium was slurried with 0.5 M aqueous sodium chloride.

<Implementation Procedures>

1) The slurry was placed in a graduated cylinder. Gravity settlement and vibrating were repeated to settle the chromatography medium bed completely, and the settled volume of the chromatography medium contained in the slurry was determined.

2) The slurry was entirely transferred to a glass filter, the chromatography medium was washed with 2 M aqueous sodium chloride on the filter, and then the chromatography medium was slurried with the 2 M aqueous sodium chloride. From the settled volume determined in 1) and the slurry volume, the slurry concentration was calculated (slurry concentration: 50%).

3) From the column internal diameter, the desired bed height and compression factor shown in Table 3, and the slurry concentration determined in 2), the amount of slurry necessary for packing was calculated, and the necessary amount of slurry was put into a 0.66-cm-diameter glass column.

4) Aqueous solution containing 2M of sodium chloride was passed through the column at a flow rate of 88 cm/h, and the chromatography medium was sedimented. Subsequently, the flow rate was increased to 1754 cm/h, and the primary compression of the chromatography medium bed was performed. Subsequently, the chromatography medium bed was compressed to 7 cm, which was the desired bed height, by a mechanical compression method.

5) The inside of the column was replaced with mobile phase (0.5 M aqueous sodium chloride).

6) The mobile phase was passed through the column at a flow rate of 1754 cm/h for 10 minutes, then the mobile phase flow direction was switched, and the mobile phase was passed through the column at a flow rate of 1315 cm/h for 10 minutes. This operation was repeated, and the passage was performed for 40 minutes in total while the mobile phase flow direction was switched three times.

<Results>

The performance of the column was evaluated according to the "As" calculation method described above. Sodium chloride was used as an evaluation sample. The results of performance are shown in Table 3.

[Table 3]

| Test No. | Bed height (cm) | Compression factor | As |
|---|---|---|---|
| 1 | 7.0 | 1.08 | 0.98 |

(Example 4)

As a chromatography medium, KANEKA KanCapA (manufactured by KANEKA CORPORATION: chromatography medium for affinity chromatography, volume-based median diameter: 65 to 85 $\mu$m, base material: highly cross-linked cellulose) was used. The chromatography medium was slurried with 0.5 M aqueous sodium chloride, and then two columns having the same bed height and compression factor were prepared by the following procedures to examine the reproducibility of the method.

<Implementation Procedures>

1) The slurry was placed in a graduated cylinder. Gravity settlement and vibrating were repeated to settle the chromatography medium bed completely, and the settled volume of the chromatography medium contained in the slurry was determined.

2) The slurry was entirely transferred to a glass filter, the chromatography medium was washed with 20% aqueous ethanol on the filter, and then the chromatography medium was slurried with the 20% aqueous ethanol. From the settled volume determined in 1) and the slurry volume, the slurry concentration was calculated (slurry concentration: 50%).

3) From the column internal diameter, the desired bed height and compression factor shown in Table 4, and the slurry concentration determined in 2), the amount of slurry necessary for packing was calculated, and the necessary amount of slurry was put into a 1.0-cm-diameter glass column.

4) Aqueous solution containing 20% of ethanol was passed through the column at a flow rate of 381 cm/h, and the chromatography medium was sedimented. Subsequently, the flow rate was increased to 1529 cm/h, and the primary compression of the chromatography medium bed was performed. Subsequently, the chromatography medium bed was compressed to 25 cm, which was the desired bed height, by a mechanical compression method.

5) The inside of the column was replaced with mobile phase (water), and then the mobile phase was passed through the column at 764 cm/h for 5 minutes, at 1528 cm/h for 5 minutes, and at 2293 cm/h for 5 minutes. The mobile phase flow direction was switched, and the passage was performed in the same manner.

6) The mobile phase was passed through the column at a flow rate of 2293 cm/h, and the mobile phase flow direction was switched every 2 minutes, 17 times in total.

<Results>

The performance of the column was evaluated according to the "As" calculation method described above. Sodium chloride was used as an evaluation sample. The results of performance are shown in Table 4.

[Table 4]

| Test No. | Bed height (cm) | Compression factor | As |
|---|---|---|---|
| 1 | 25.0 | 1.08 | 1.01 |
| 2 | 25.0 | 1.08 | 1.20 |

(Example 5)

As a chromatography medium, KANEKA KanCapA (manufactured by KANEKA CORPORATION: chromatography medium for affinity chromatography, volume-based median diameter: 65 to 85 μm, base material: highly cross-linked cellulose) was used. The chromatography medium was slurried with 0.5 M aqueous sodium chloride.

<Implementation Procedures>

1) The slurry was placed in a graduated cylinder. Gravity settlement and vibrating were repeated to settle the chromatography medium bed completely, and the settled volume of the chromatography medium contained in the slurry was determined.

2) The slurry was entirely transferred to a glass filter, the chromatography medium was washed with water on the filter, and then the chromatography medium was slurried with water. From the settled volume determined in 1) and the slurry volume, the slurry concentration was calculated (slurry concentration: 50%).

3) From the column internal diameter, the desired bed height and compression factor shown in Table 5, and the slurry concentration determined in 2), the amount of slurry necessary for packing was calculated, and the necessary amount of slurry was put into a 2.2-cm-diameter glass column.

4) Water was passed through the column at a flow rate of 79 cm/h, and the chromatography medium was sedimented. Subsequently, the flow rate was increased to 1578 cm/h in stages, and the primary compression of the chromatography medium bed was performed. Subsequently, the chromatography medium bed was compressed to 20.9 cm, which was the desired bed height, by a mechanical compression method.

5) Water (mobile phase) was passed through the column at 789 cm/h for 10 minutes.

6) The mobile phase was passed through the column at a flow rate of 1026 cm/h, and the mobile phase flow direction was switched every 2 minutes, 19 times in total.

<Results>

The performance of the column was evaluated according to the "As" calculation method described above. Acetone was used as an evaluation sample. The results of performance are shown in Table 5.

[Table 5]

| Test No. | Bed height (cm) | Compression factor | As |
|---|---|---|---|
| 1 | 20.9 | 1.11 | 0.98 |

(Example 6)

As a chromatography medium, KANEKA KanCapA (manufactured by KANEKA CORPORATION: chromatography medium for affinity chromatography, volume-based median diameter: 65 to 85 μm, base material: highly cross-linked cellulose) was used. The chromatography medium was slurried with 0.5 M aqueous sodium chloride.

<Implementation Procedures>

1) The slurry was placed in a graduated cylinder. Gravity settlement and vibrating were repeated to settle the chromatography medium bed completely, and the settled volume of the chromatography medium contained in the slurry was determined.
2) The slurry was entirely transferred to a glass filter, the chromatography medium was washed with water on the filter, and then the chromatography medium was slurried with water. From the settled volume determined in 1) and the slurry volume, the slurry concentration was calculated (slurry concentration: 50%).
3) From the column internal diameter, the desired bed height and compression factor shown in Table 6, and the slurry concentration determined in 2), the amount of slurry necessary for packing was calculated, and the necessary amount of slurry was put into a 2.2-cm-diameter glass column.
4) Water was passed through the column at a flow rate of 79 cm/h, and the chromatography medium was sedimented. Subsequently, the flow rate was increased to 1578 cm/h in stages, and the primary compression of the chromatography medium bed was performed. Subsequently, the chromatography medium bed was compressed to 20.9 cm by a mechanical compression method.
5) Water (mobile phase) was passed through the column at 789 cm/h for 10 minutes.
6) The mobile phase was passed through the column at a flow rate of 1026 cm/h, and the mobile phase flow direction was switched every 2 minutes, 19 times in total.
7) The chromatography medium bed was compressed to 20.7 cm, which was the desired bed height, by a mechanical compression method.

<Results>

The performance of the column was evaluated according to the "As" calculation method described above. Acetone was used as an evaluation sample. The results of performance are shown in Table 6.

[Table 6]

| Test No. | Bed height (cm) | Compression factor | As |
|----------|-----------------|--------------------|-----|
| 1 | 20.7 | 1.12 | 0.96 |

(Comparative Example 1)

As a chromatography medium, KANEKA KanCapA (manufactured by KANEKA CORPORATION: chromatography medium for affinity chromatography, volume-based median diameter: 65 μm to 85 μm, base material: highly cross-linked cellulose) was used. The chromatography medium was slurried with 0.5 M aqueous sodium chloride.

<Implementation Procedures>

1) The slurry was placed in a graduated cylinder. Gravity settlement and vibrating were repeated to settle the chromatography medium bed completely, and the settled volume of the chromatography medium contained in the slurry was determined.
2) The slurry was entirely transferred to a glass filter, the chromatography medium was washed with 20% aqueous ethanol on the filter, and then the chromatography medium was slurried with the 20% aqueous ethanol. From the settled volume determined in 1) and the slurry volume, the slurry concentration was calculated (slurry concentration: 50%).
3) From the column internal diameter, the desired bed height and compression factor shown in Table 7, and the slurry concentration determined in 2), the amount of slurry necessary for packing was calculated, and the necessary amount of slurry was put into a 1.0-cm-diameter glass column.

4) Aqueous solution containing 20% of ethanol was passed through the column at a flow rate of 381 cm/h, and the chromatography medium was sedimented. Subsequently, the flow rate was increased to 1529 cm/h, and the primary compression of the chromatography medium bed was performed. Subsequently, the chromatography medium bed was compressed to 25 cm, which was the desired bed height, by a mechanical compression method.

5) The inside of the column was replaced with mobile phase (water), and then the mobile phase was passed through the column at 764 cm/h for 5 minutes, at 1528 cm/h for 5 minutes, and at 2293 cm/h for 5 minutes. The mobile phase flow direction was switched, and the passage was performed in the same manner.

<Results>

The performance of the column was evaluated according to the "As" calculation method described above. Sodium chloride was used as an evaluation sample. The results of performance are shown in Table 7. In this comparative example, the chromatography medium, the column size, the compression factor, and the packing method are all the same as in Example 4, and only the passage conditions after packing are different from those of Example 4. In Example 4 where the passage was performed while the flow direction was switched several times, "As" was 1.01 and 1.20, which are within a suitable range. In contrast, in this comparative example where the mobile flow direction was switched once, "As" was 0.49, which is significantly lower than the suitable range.

[Table 7]

| Test No. | Bed height (cm) | Compression factor | As |
|---|---|---|---|
| 1 | 25.0 | 1.08 | 0.49 |

(Comparative Example 2)

As a chromatography medium, MabSelect SuRe (manufactured by GE Healthcare: chromatography medium for affinity chromatography, volume-based median diameter: 85 $\mu$m, base material: highly cross-linked agarose) was used. The chromatography medium was slurried with 0.5 M aqueous sodium chloride. Two columns having the same bed height and compression factor were prepared.

<Implementation Procedures>

1) The slurry was placed in a graduated cylinder. Gravity settlement and vibrating were repeated to settle the chromatography medium bed completely, then the settled volume of the chromatography medium contained in the slurry was determined, and the slurry concentration was calculated (slurry concentration: 50%).

2) From the column internal diameter, the desired bed height and compression factor shown in Table 8, and the slurry concentration determined in 1), the amount of slurry necessary for packing was calculated, and the necessary amount of slurry was put into a 0.66-cm-diameter glass column.

3) Mobile phase (0.5 M aqueous sodium chloride) was passed through the column at a flow rate of 877 cm/h to perform the primary compression of the chromatography medium bed, and then the chromatography medium bed was compressed to 7 cm, which was the desired bed height, by a mechanical compression method.

<Results>

The performance of the column was evaluated according to the "As" calculation method described above. Sodium chloride was used as an evaluation sample. The results of performance are shown in Table 8. In this comparative example, the chromatography medium, the column size, the compression factor, and the packing method are all the same as in Example 2, and the only difference from Example 2 is that the passage of mobile phase through the column after packing was not conducted. In Example 2 where the passage was performed while the flow direction was switched several times, "As" was 1.00, which is within a suitable range. In contrast, in this comparative example where the passage after packing was not conducted, "As" was 0.61 and 0.49, which are significantly lower than the suitable range.

[Table 8]

| Test No. | Bed height (cm) | Compression factor | As |
|---|---|---|---|
| 1 | 7.0 | 1.08 | 0.61 |
| 2 | 7.0 | 1.08 | 0.49 |

(Comparative Example 3)

As a chromatography medium, Fractogel EMD COO-(M) (manufactured by Merck Millipore Corporation: chromatography medium for ion exchange chromatography, particle size: not less than 40 $\mu$m and not more than 90 $\mu$m, base material: synthetic polymer) was used. The chromatography medium was slurried with 0.5 M aqueous sodium chloride.

<Implementation Procedures>

1) The slurry was placed in a graduated cylinder. Gravity settlement and vibrating were repeated to settle the chromatography medium bed completely, and the settled volume of the chromatography medium contained in the slurry was determined.
2) The slurry was entirely transferred to a glass filter, the chromatography medium was washed with 2 M aqueous sodium chloride on the filter, and then the chromatography medium was slurried with 2 M aqueous sodium chloride. From the settled volume determined in 1) and the slurry volume, the slurry concentration was calculated (slurry concentration: 50%).
3) From the column internal diameter, the desired bed height and compression factor shown in Table 9, and the slurry concentration determined in 2), the amount of slurry necessary for packing was calculated, and the necessary amount of slurry was put into a 0.66-cm-diameter glass column.
4) Aqueous solution containing 2M of sodium chloride was passed through the column at a flow rate of 88 cm/h, and the chromatography medium was sedimented. Subsequently, the flow rate was increased to 1754 cm/h, and the primary compression of the chromatography medium bed was performed. Subsequently, the chromatography medium bed was compressed to 7 cm, which was the desired bed height, by a mechanical compression method.
5) The inside of the column was replaced with mobile phase (0.5 M aqueous sodium chloride).
6) The mobile phase was passed through the column at a flow rate of 1754 cm/h for 10 minutes, then the mobile phase flow direction was switched, and the mobile phase was passed through the column at a flow rate of 1315 cm/h for 10 minutes.

<Results>

The performance of the column was evaluated according to the "As" calculation method described above. Sodium chloride was used as an evaluation sample. The results of performance are shown in Table 9. In this comparative example, the chromatography medium, the column size, the compression factor, and the packing method are all the same as in Example 3, and only the passage conditions after packing are different from those of Example 3. In Example 3 where the passage was performed while the flow direction was switched several times, "As" was 0.98, which are within a suitable range. In contrast, in this comparative example where the mobile phase flow direction was switched once, "As" was 0.77, which is lower than the suitable range.

[Table 9]

| Test No. | Bed height (cm) | Compression factor | As |
|---|---|---|---|
| 1 | 7.0 | 1.08 | 0.77 |

(Comparative Example 4)

As a chromatography medium, KANEKA KanCapA (manufactured by KANEKA CORPORATION: chromatography medium for affinity chromatography, volume-based median diameter: 65 to 85 $\mu$m, base material: highly cross-linked cellulose) was used. The chromatography medium was slurried with 0.5 M aqueous sodium chloride.

<Implementation Procedures>

1) The slurry was placed in a graduated cylinder. Gravity settlement and vibrating were repeated to settle the chromatography medium bed completely, and the settled volume of the chromatography medium contained in the slurry was determined.

2) The slurry was entirely transferred to a glass filter, the chromatography medium was washed with water on the filter, and then the chromatography medium was slurried with water. From the settled volume determined in 1) and the slurry volume, the slurry concentration was calculated (slurry concentration: 50%).

3) From the column internal diameter, the desired bed height and compression factor shown in Table 10, and the slurry concentration determined in 2), the amount of slurry necessary for packing was calculated, and the necessary amount of slurry was put into a 2.2-cm-diameter glass column.

4) Water was passed through the column at a flow rate of 79 cm/h, and the chromatography medium was sedimented. Subsequently, the flow rate was increased to 1578 cm/h in stages, and the primary compression of the chromatography medium bed was performed. Subsequently, the chromatography medium bed was compressed to 20.9 cm, which was the desired bed height, by a mechanical compression method.

5) Water was passed through the column at 789 cm/h for 10 minutes.

<Results>

The performance of the column was evaluated according to the "As" calculation method described above. Acetone was used as an evaluation sample. The results of performance are shown in Table 10. In this comparative example, the chromatography medium, the column size, the compression factor, and the packing method are all the same as in Example 5, and only the passage conditions after packing are different from those of Example 5. In Example 5 where the passage was performed while the flow direction was switched several times, "As" was 0.98, which are within a suitable range. In contrast, in this comparative example where the mobile phase flow direction was not switched, that is to say, the flow direction was constant, "As" was 0.77, which is lower than the suitable range.

[Table 10]

| Test No. | Bed height (cm) | Compression factor | As |
|---|---|---|---|
| 1 | 20.9 | 1.11 | 0.77 |

**Claims**

1. A method for preparing a small-diameter chromatography column , comprising the steps of:

   packing a column with a chromatography medium at prescribed compression factor ; and
   passing a mobile phase through the column packed with the chromatography medium while switching the mobile phase flow direction two or more times.

2. A method for preparing a small-diameter chromatography column , comprising the steps of:

   packing a column with a chromatography medium at the compression factor smaller than the prescribed compression factor ;
   passing a mobile phase through the column packed with the chromatography medium while switching the mobile phase flow direction two or more times; and thereafter
   compressing the chromatography medium until the prescribed compression factor is achieved.

3. The method according to claims 1 or 2, wherein internal diameter of the small-diameter chromatography column is not more than 3cm.

4. The method according to any one of claims 1 to 3, wherein the prescribed compression factor is not less than 1.02 and not more than 1.30.

5. The method for preparing a small-diameter chromatography column with prescribed bed volume (a) by packing the column with the chromatography medium according to any one of claims 1 to 4,
wherein, in said packing step, the chromatography medium having settled volume (b) of not less than 1.02 and not more than 1.30 times larger than the bed volume (a) is packed into the column under compression in the form of slurry, before passing the mobile phase through the column while switching the direction two or more times.

6. The method according to any one of claims 1 to 5, wherein a base material of the chromatography medium is agarose, cellulose or synthetic polymer.

7. The method according to any one of claims 1 to 6, wherein the chromatography medium has the volume-based median diameter of not less than $10\mu$m and not more than $500\mu$m.

8. The small-diameter chromatography column prepared by the method set forth in any one of claims 1 to 7, having the asymmetry factor of not less than 0.80 and not more than 1.80.

[Fig. 1]

## INTERNATIONAL SEARCH REPORT

| | International application No. |
|---|---|
| | PCT/JP2014/076835 |

**A. CLASSIFICATION OF SUBJECT MATTER**
*G01N30/56*(2006.01)i, *G01N30/88*(2006.01)i

According to International Patent Classification (IPC) or to both national classification and IPC

**B. FIELDS SEARCHED**

Minimum documentation searched (classification system followed by classification symbols)
G01N30/00-30/96, B01D15/08

Documentation searched other than minimum documentation to the extent that such documents are included in the fields searched
Jitsuyo Shinan Koho            1922-1996  Jitsuyo Shinan Toroku Koho   1996-2015
Kokai Jitsuyo Shinan Koho   1971-2015  Toroku Jitsuyo Shinan Koho   1994-2015

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | Microfilm of the specification and drawings annexed to the request of Japanese Utility Model Application No. 193806/1983(Laid-open No. 100662/1985) (Kabushiki Kaisha Nishihara Kankyo Eisei Kenkyusho), 09 July 1985 (09.07.1985), entire text; fig. 1, 2 (Family: none) | 1-8 |

| ☒ Further documents are listed in the continuation of Box C. | ☐ See patent family annex. |
|---|---|

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 January 2015 (06.01.15) | 13 January 2015 (13.01.15) |

| Name and mailing address of the ISA/ | Authorized officer |
|---|---|
| Japan Patent Office | |
| Facsimile No. | Telephone No. |

Form PCT/ISA/210 (second sheet) (July 2009)

**18**

**INTERNATIONAL SEARCH REPORT**

International application No.

PCT/JP2014/076835

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2010-520485 A  (GE Healthcare Bio-Sciences Corp.),<br>10 June 2010 (10.06.2010),<br>paragraphs [0016] to [0043]; fig. 1 to 5<br>& US 2010/0313992 A1    & EP 2682169 A1<br>& WO 2008/109192 A1    & CA 2679245 A<br>& CN 101622044 A        & RU 2009132883 A<br>& AU 2008223363 A | 1-8 |
| Y | JP 2007-205871 A  (Shiseido Co., Ltd.),<br>16 August 2007 (16.08.2007),<br>paragraph [0017]<br>(Family: none) | 6 |
| A | JP 2013-515258 A  (GE Healthcare Bio-Sciences AB.),<br>02 May 2013 (02.05.2013),<br>paragraph [0018]<br>& US 2012/0267299 A1    & EP 2517000 A1<br>& WO 2011/078772 A1    & CA 2785198 A<br>& CN 102656452 A | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013515258 A

- JP 2013211452 A

**Non-patent literature cited in the description**

- **LARS HAGEL ; GUNTER JAGSCHIES ; GAIL SOFER.** Handbook of Process Chromatography. 2008, 321-330